# EUROPEAN PATENT APPLICATION

(11) **EP 3 135 993 A1**
(43) Date of publication of application: **01.03.2017**
(21) Application number: 15447010.8
(22) Date of filing: 29.08.2015
(51) Int. Cl.: F21V 21/096

(54) **A SLIDABLE FIXTURE**

(71) Applicant: Umbrosa NV, 8800 Roeselare (BE)
(72) Inventor: Haemers, Christophe, 8800 Roeselare (BE); Lannoye, Michel, 8800 Roeselare (BE)
(74) Representative: BiiP cvba

(57) **Abstract**

The present invention is directed to a slidable fixture comprising a first body and a second body, wherein the first body and the second body are magnetically attracting each other for clamping a sheet carrier in between, and wherein the surface of the first and second body facing the sheet carrier are sufficiently smooth for sliding the fixture over the sheet carrier upon pulling for repositioning it on the sheet carrier, characterized in that first body is a casing having a cavity adapted for integrating a light or heat or electrical energy delivering device or multimedia device therein or a combination thereof.

## Description

### FIELD OF THE INVENTION

The present invention relates to a slidable fixture to be fixed on a sheet carrier for holding a light or heat or electrical energy delivering device or multimedia device or a combination thereof.

### BACKGROUND OF THE INVENTION

In order to mount accessories such as lamps under a shade sail or in a tent, fixtures in the form of a hook are provided which can be fixed to the shade sail support frame or tent support frame and which can carry a lamp or another accessory. Obviously, the number of available positions the lamp can be hung is limited to positions in the near neighborhood of the frame. Another problem is that modern tents often have an external support frame.

In an attempt to solve the above problems, WO2005028953 provides a mounting device for mounting accessories to for example a tent. This mounting device comprises a first and second body, the first member may be provided with a hook for hanging a lamp or another accessory, or with a slot into which a corresponding part of a hook or an accessory such as a lamp may be inserted. Both bodies are magnetically attracted to one another so that when applied on opposite sides of a tent fabric, the fabric is clamped keeping the mounting device retained. Both bodies have surrounding surface edges which are profiled to allow the mounting device to slide smoothly over the wall for repositioning it.

However, a remaining problem with the mounting device as described in the previous paragraph is that such mounting device is not sufficiently resistant against wind load. In particular in case of using it in an open construction such as a shade sail or sunbrella, the lamp or any other accessory on the hook will heavily swing. Even if the mounting device provides a slot and the lamp or other accessory is inserted at one end in the slot of the mounting device, the lamp or accessory will be fully exposed to wind load. This will induce a lever effect on the first member such that with increasing wind load, the risk for the mounting device coming loose increases proportionally.

Considering the above, it is a first object of the present invention to obtain a slidable fixture keeping the lamp or any other accessory firmly in position and providing sufficient wind load resistance to winds up to 60, or 70, or 80, or preferably 90 km/h.

Another object of the present invention is to obtain a slidable fixture providing improved load distribution over the sheet carrier (e.g. a shade sail), such that sagging is reduced compared to conventional fixtures.

Another object of the present invention is to provide a slidable fixture which offers a user the choice to fix it slidably over a sheet carrier (e.g. a shade sail) or to secure it tightly.

### SUMMARY OF THE INVENTION

The present invention is directed to a slidable fixture comprising a first body and a second body, wherein the first body and the second body are magnetically attracting each other for clamping a sheet carrier in between, and wherein the surface of the first and second body facing the sheet carrier are sufficiently smooth for sliding the fixture over the sheet carrier upon pulling for repositioning it on the sheet carrier, characterized in that first body is a casing having a cavity adapted for integrating a light or heat or electrical energy delivering device or multimedia device therein or a combination thereof.

### BRIEF DESCRIPTION OF THE DRAWINGS

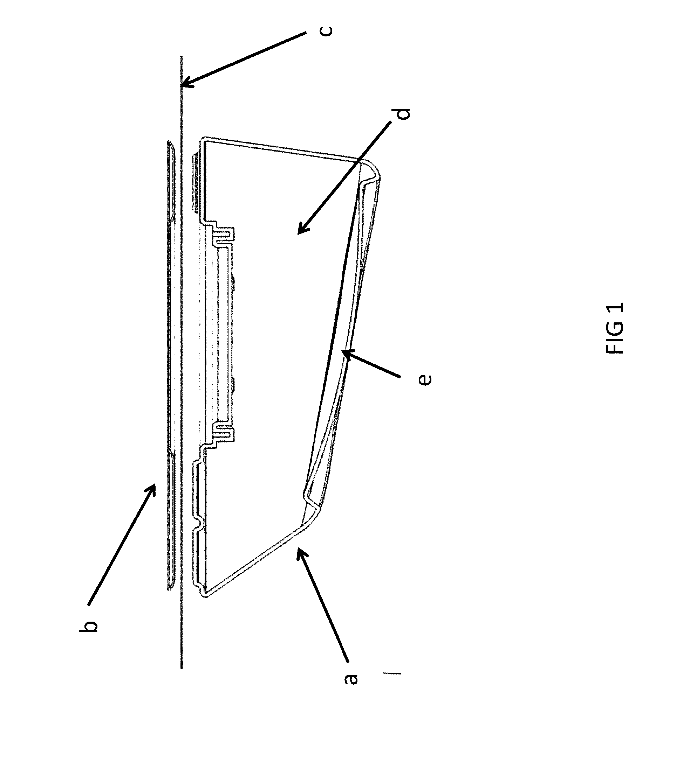

FIGS 1-5 illustrate embodiments of a slidable fixture in accordance with the present invention.

### DETAILED DESCRIPTION OF THE INVENTION

In a first embodiment as illustrated in FIG 1, the present invention is directed to a slidable fixture comprising a first body (a) and a second body (b), wherein the first body and the second body are magnetically attracting each other for clamping a sheet carrier (c) in between, and wherein the surface of the first and second body facing the sheet carrier are sufficiently smooth for sliding the fixture over the sheet carrier upon pulling for repositioning it on the sheet carrier, characterized in that first body is a casing (a) having a cavity (d) adapted for integrating a light or heat or electrical energy delivering device (e) or multimedia device (e) therein, or a combination thereof.

The first body and the second body are magnetically attracted to each another so that when positioned on opposite sides of the sheet carrier the surfaces facing the sheet carrier frictionally engage the part of the sheet carrier between them and thereby retain the slidable fixture.

In the context of the present invention, sufficiently smooth for sliding is understood as the surface roughness and relief being such that, upon pulling the fixture for repositioning it, the sheet carrier is not damaged and the sliding movement is not blocked by parts of the surface gripping the sheet carrier. In addition, the surfaces of the first and second bodies facing the sheet carrier may have surrounding edges which are profiled to allow the fixture to slide smoothly over the sheet carrier when fixture is repositioned relative to the sheet carrier.

In the context of the present invention, the cavity being adapted for integrating is understood as the cavity allowing positioning the light or heat or electrical energy delivering device or multimedia device at least partially or completely sunken in the casing, such that casing firmly holds it and the device is less exposed to wind load compared to conventional fixtures.

By providing the first body in the form of a casing with a cavity as described above, the light or heat or electrical energy delivering device or multimedia device in the slidable fixture is kept firmly in position and may provide improved wind load resistance, preferably sufficiently resistant to winds up to 60, or 70, or 80, or even 90 km/h.

In the context of the present invention, the sheet carrier may be a rigid sheet as for example made from metal, wood, plastic or glass, or may be a flexible sheet as for example fabric, sail, film, etc. Therefore a slidable fixture in accordance with the present invention may be applied in umbrella or sunbrella equipment, shade sail equipment, wind screen equipment, tent equipment, boating equipment, decoration equipment, stage set equipment and partitioning screen equipment.

In accordance with the present invention, the light or heat or electrical energy delivering device or multimedia device may be for example a LED source, an infrared heater, an audio speaker, a video screen, a mobile device charging hub or a combination thereof.

In an embodiment of the present invention, the cavity may further be adapted for integrating an electrical energy supply circuit for the light or heat or electrical energy delivering device or multimedia device. In this case the user can install a device with its electrical energy supply circuit into the cavity.

Another possibility may be that the casing holds an integrated electrical energy supply circuit for the light or heat or electrical energy delivering device or multimedia device. In this case, the user only has to mount the device and connect it to the energy supply circuit already provided in the casing.

The energy supply circuit in the casing may comprise one or more batteries, rechargeable or not rechargeable, or alternatively energy may be supplied via cable from sources external to the slidable fixture (e.g. electricity grid, or solar panel). In case of using rechargeable batteries, a charging station may be provided for direct or conductive charging.

Preferably, the energy supply circuit for supplying energy to the device in the casing is fully integrated in the casing, i.e. the second body does not contain any part contributing to supplying energy to the device in the casing. The benefit thereof is that there is no need for a complex system wherein physical contact for energy transfer between the first body and the second body is to be achieved after positioning the lamp, for example by piercing the flexible sheet carrier with pins or electrodes which are retractable in order not to block a sliding repositioning of the fixture over the sheet carrier. A second benefit is that the slidable fixture can also be used then on unpierceable sheet carriers such as glass.

However, slidable fixtures according to the present invention using energy supply circuits based on conductivity wherein the second body contains a charger for conductively charging batteries in the casing through the sheet carrier, or wherein energy transfer is occurring without physical contact between the first and the second body may be possible.

The casing and the second body attract each other with a magnetic force sufficient for being retained on the sheet carrier and sufficient for sliding the second body over the sheet carrier by dragging the casing.

In an embodiment of the present invention, the second body's surface facing the sheet carrier has a surface area of at least 100cm², or at least 200, or preferably at least 300, or at least 400, or at least 500cm², for example 250x200mm. This size of surface area may result in improved load distribution over the sheet carrier (e.g. a shade sail), such that sagging is reduced compared to conventional fixtures.

In another embodiment of the present invention, also the casing's surface facing the sheet carrier has a surface area of at least 100cm², or at least 200, or preferably at least 300, or at least 400, or at least 500cm². This size of surface area may result in improved wind load resistance.

In an embodiment of the present invention, the second body is a second casing having a cavity adapted for holding a second light or heat or electrical energy delivering device or multimedia device therein and a second electrical energy supply circuit.

In an embodiment of the present invention, the second body comprises a 3-dimensional body having a counterplate, or only a counterplate. The counterplate may be made of magnetic material, e.g. steel, or may be made of non-magnetic material (e.g. plastic) provided with magnets.

In an embodiment in accordance with the present invention, the second body's surface and/or the casing's surface facing the sheet carrier may be made of magnetic material.

Alternatively, the second body's surface and/or the casing's surface facing the sheet carrier may comprise permanent magnets positioned such as to attract each other.

The size and magnetic force of the magnets depends on the weight of the casing and/or the weight of the device and/or the expected wind load.

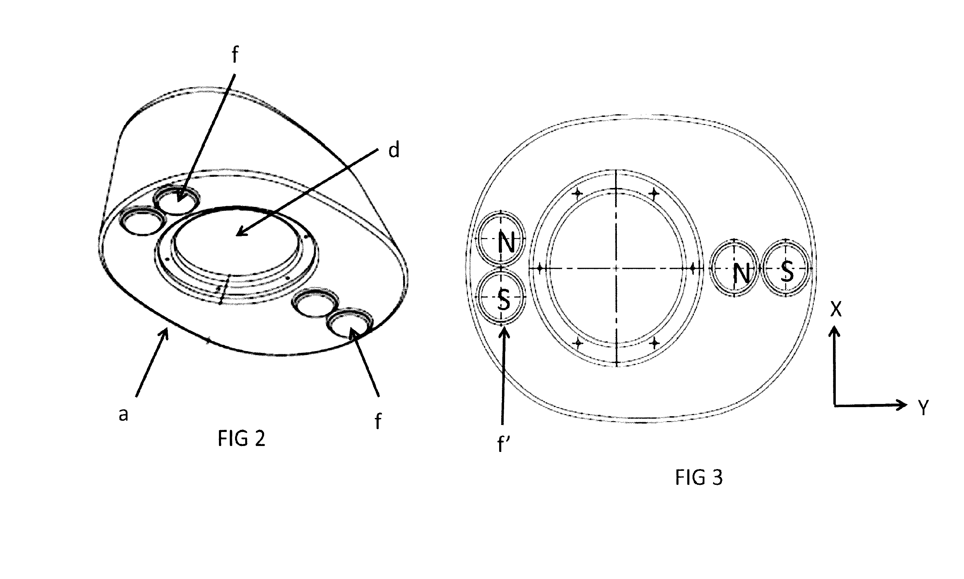

Preferably, as illustrated in FIG 2, the magnets (f) on the casing are positioned at least partially in line. This results in that the casing upon repositioning may be tilted relatively easy in relation to the second body such that the distance between the magnets of the casing and the magnets of the second body becomes greater and casing may become loose without exposing the sheet carrier to high pulling force.

In a particular embodiment as illustrated in FIG 3, the second body's surface comprises permanent magnets (f') with alternating polarities (N, S) and the casing's surface facing the sheet carrier comprises permanent magnets with respectively opposite polarities. This may result in stronger magnetic coupling, better and easier positioning of the first and second body substantially exactly opposite to each other, and more efficient and easier sliding over the sheet carrier. By positing one or more couples of magnets with alternating polarities along the x-axis and one or more couples of magnets with alternating polarities along the y-axis, upon repositioning the fixture the corresponding couples will attract each other and the first and second body may be kept easier at substantially exactly opposite positions.

In a preferred embodiment the magnets of the casing are protruding, preferably at least 2mm, resulting in that the direct contact area between the casing and the sheet carrier is limited and not hindering sliding repositioning.

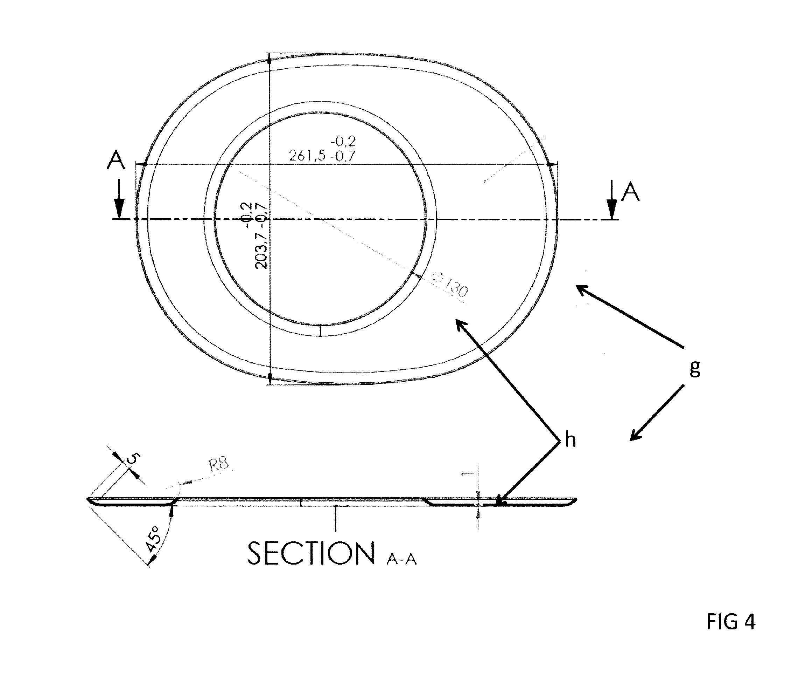

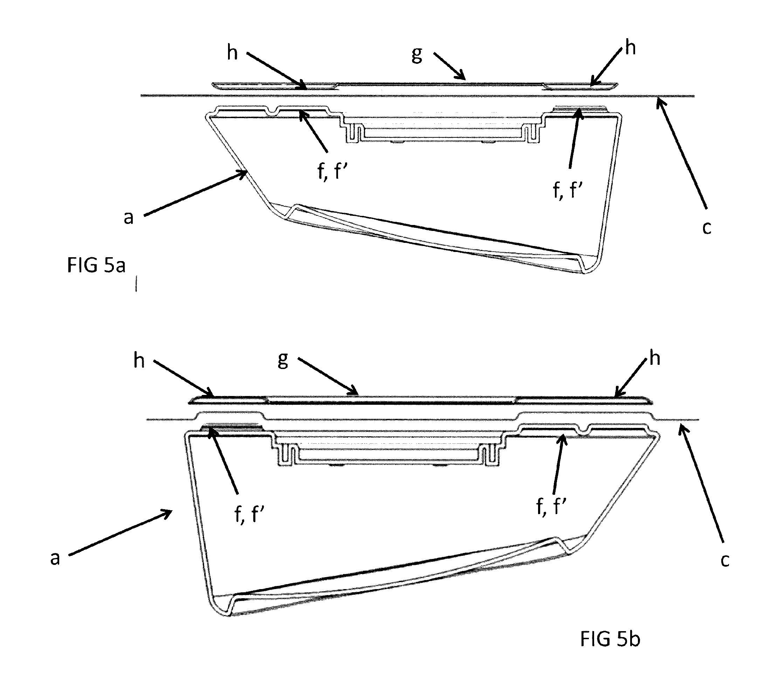

In a particular embodiment of the present invention and illustrated in FIG 4, the counterplate (g) has two opposite surfaces adapted for facing the sheet carrier, wherein one of said surfaces comprises one or more recesses (h). As to be seen in FIG 5b, these recesses are positioned such that they engage on the protruding magnets (f, f) of the casing such that a flexible sheet carrier is more sufficiently clamped between the counterplate and the magnets of the casing. So a user can mount the counterplate without these recesses facing the sheet carrier (see FIG 5a), or mounting the counterplate with these recesses facing the sheet carrier (see FIG 5b), offering him the choice to respectively position the fixture still slidably on for example a horizontally positioned shade sail, or to secure it tightly for example on a vertically positioned flexible partition wall fabric.

The casing may be made from metal or plastic, and preferably from molded plastic. Rotational molding is preferred since this production technique minimizes the risk for moisture or water infiltration in the casing.

In a further embodiment, the slidable fixture may comprises a light or heat or electrical energy delivering device or multimedia device integrated in the casing.

## Claims

1. A slidable fixture comprising a first body and a second body, wherein the first body and the second body are magnetically attracting each other for clamping a sheet carrier in between, and wherein the surface of the first and second body facing the sheet carrier are sufficiently smooth for sliding the fixture over the sheet carrier upon pulling for repositioning it on the sheet carrier, **characterized in that** first body is a casing having a cavity adapted for integrating a light or heat or electrical energy delivering device or multimedia device therein or a combination thereof.

2. A slidable fixture according to claim 1, wherein the cavity is adapted for integrating an electrical energy supply circuit for the light or heat or electrical energy delivering device or multimedia device.

3. A slidable fixture according to claim 1, wherein the casing holds an integrated electrical energy supply circuit for the light or heat or electrical energy delivering device or multimedia device.

4. A slidable fixture according to any of the above claims, wherein the first body and the second body are magnetically attracting each other with a magnetic force sufficient for sliding the second body over the sheet carrier by dragging the casing.

5. A slidable fixture according to any of the above claims, wherein the light or heat or electrical energy delivering device or multimedia device is a LED source, an infrared heater, an audio speaker, a video screen, or a mobile device charging hub or a combination thereof.

6. A slidable fixture according to any of the above claims, wherein the second body's surface facing the sheet carrier has a surface area of at least 100cm².

7. A slidable fixture according to any of the above claims, wherein the second body is a second casing having a cavity adapted for holding a second light or heat or electrical energy delivering device or multimedia device therein and a second electrical energy supply circuit.

8. A slidable fixture according to claims 1-6, wherein the second body is a counterplate.

9. A slidable fixture according to claim 8, wherein the counterplate has two opposite surfaces adapted for facing the sheet carrier, wherein one of said surfaces comprises one or more recesses.

10. A slidable fixture according to any of the above claims, wherein the both the second body's surface comprises permanent magnets with alternating polarities and the casing's surface facing the sheet carrier comprises permanent magnets with respectively opposite polarities.

11. A slidable fixture according to any of the above claims, wherein the casing is preferably made by rotational molding.

12. A slidable fixture according any of the above claims comprising a light or heat or electrical energy delivering device or multimedia device integrated in the first body or a combination thereof.
